# EUROPÄISCHE PATENTSCHRIFT

(11) **EP 1 776 738 B1**
(45) Veröffentlichungstag und Bekanntmachung des Hinweises auf die Patenterteilung: **27.07.2011**
(21) Anmeldenummer: 06778309.2
(22) Anmeldetag: 21.08.2006
(51) Int. Cl.: H01R 4/24, H02K 5/22

(54) **ANSCHLUSSVORRICHTUNG FÜR EINEN ELEKTROMOTOR**
CONNECTING DEVICE FOR AN ELECTRIC MOTOR
DISPOSITIF DE CONNEXION POUR MOTEUR ELECTRIQUE

(30) Priorität: 23.08.2005 DE 202005013254 U
(43) Veröffentlichungstag der Anmeldung: 25.04.2007
(73) Patentinhaber: ebm-papst Mulfingen GmbH & Co. KG, 74673 Mulfingen (DE)
(72) Erfinder: ERNEKER, Roland, 74653 Künzelsau (DE); MASCHKE, Mathias, 74523 Schwäbisch Hall (DE)
(74) Vertreter: Patentanwälte Dr. Solf & Zapf
(86) Internationale Anmeldenummer: PCT/EP2006/065521
(87) Internationale Veröffentlichungsnummer: WO 2007/023153

(56) Entgegenhaltungen:
- EP-A- 0 029 328
- EP-A- 0 603 478
- DE-A1- 19 842 170
- DE-U1- 20 212 273

## Beschreibung

Die vorliegende Erfindung betrifft eine Anschlussvorrichtung für einen Elektromotor, insbesondere einen Außenläufermotor, zum Verbinden von Wicklungsenden eines Stators mit einer Anschlussleitung, bestehend aus einer in einer radial zur Statorachse ausgerichteten Ebene und innerhalb eines durch den Statordurchmesser definierten Umfangskreises angeordneten Verschaltungsplatte, die ausgeformte Leiterbahnführungen und Leiterbahnen mit Anschlussfahnen zur Kontaktierung der Statorwicklung und mit Anschlussbereichen zur Kontaktierung der Anschlussleitung aufweist.

Eine derartige Anschlussvorrichtung ist als Verschaltungsplatte zum Verbinden der Drahtenden einer Statorwicklung aus der Druckschrift EP 0 603 478 B1 (D1) bekannt. Die Verschaltungsplatte besteht aus einem senkrecht zur Statorachse ausgerichteten Basisteil mit einer Aufnahmeöffnung, die einen Stirnisolationsschaft eines Stators umschließt, mit als Ausnehmungen bezeichneten Kontaktkammern zur Aufnahme von elektrischen Verbindungselementen und mit durch Trennstege abgegrenzten Leiterbahnführungen. In den Führungen verlaufen aus Blechstanzteilen geformte Leiterbahnen. Die taschenförmigen Ausnehmungen sind paarweise spiegelsymmetrisch zu einer durch den Mittelpunkt der Aufnahmeöffnung verlaufenden Symmetrielinie angeordnet. In den Ausnehmungen liegen die in ihren Endbereichen als Flachsteckerabschnitte ausgebildeten Leiterbahnen, auf die in tangentialer Bewegungsrichtung Anschlussbuchsen einer Motoranschlussleitung aufgesteckt werden. Die elektrische Kontaktierung wird also hier durch ein Stecker-Buchse-System realisiert.

Eine Anschlusstechnik mittels Schneid-Klemm-Kontakten ist in der Druckschrift DE 202 12 273 U1 (D2) offenbart. Dort ist ein durch Umspritzen geformtes, stirnseitig am Stator angeordnetes Isolierelement als Bestandteil eine Verschaltungsanordnung zum direkten Verschalten von Wicklungsdrähten einer Statorwicklung mit einer elektrischen Anschlussleitung beschrieben, wobei in Schneid-Klemm-Technik ausgeführte Kontaktelemente zum Kontaktieren der Wicklungsdrähte und der Anschlussleitung in dem Isolierelement gehaltert sind. Durch einen Steck-Füge-Vorgang eines Aufnahmegehäuses auf das Isolierelement wird mittels der Schneid-Klemm-Wirkung der Schneid-Klemm-Kontakte eine direkte elektrische Verbindung zwischen den Wicklungsdrähten und der Anschlussleitung hergestellt. Leiterbahnen als Verbindungs- oder Verschaltungselemente sind nicht offenbart.

Diese Anschlussvorrichtungen weisen jedoch Nachteile auf. So sind in der in D1 offenbarten technischen Lehre vier Einzelsteckvorgänge notwendig, um den Motor mit einer externen Anschlussleitung zu kontaktieren. Jeder Einsteckvorgang muss manuell durchgeführt werden, wobei die tangentiale Einführung jeder einzelnen Buchse nicht nur Präzision erfordert, sondern auch Raum in einer radialen Ebene beansprucht, der bei ungünstigen Einbaupositionen des Motors oft beschränkt ist.

Ebenso mit Nachteilen behaftet ist die Ausführung in Schneid-Klemm-Technik aus der D2. Durch die gleichzeitige Kontaktierung der internen Wicklungsdrähte und der außen herangeführten Anschlussleitung ist eine Vorkonfektionierung der externen Anschlussleitung nicht möglich. Die Herstellung der elektrischen Verbindung zwischen den Wicklungsdrähten und dem Außenanschluss erfolgt in einem Arbeitsschritt erst durch Aufsetzen eines Aufnahmegehäuses, indem die in dem Isolierelement gehalterten Schneid-Klemm-Kontakte die jeweiligen Leiterisolationen durchtrennen. Zudem sind in der D2 keine Leiterbahnen offenbart, die eine individuelle Verschaltung der Wicklungsdrahtenden gestatten. Die Druckschrift DE 198 42 170 A1 offenbart eine Anschlussvorrichtung gemäß dem Oberbegriff des Anspruchs 1.

Der vorliegenden Erfindung liegt die Aufgabe zu Grunde, eine Anschlussvorrichtung der eingangs beschriebenen Art zu entwickeln, durch die eine Vereinfachung des Fertigungsprozesses und der Motorendmontage in Verbindung mit einer Bauteilreduktion erzielt werden kann.

Diese Aufgabe wird erfindungsgemäß durch die Merkmale des unabhängigen Anspruchs 1 gelöst. Vorteilhafte Ausgestaltungsmerkmale sind in den abhägigen Ansprüchen enthalten. Demnah weist die Anschlussvorrichtung ein an der Anschlussleitung vormontierbares Steckerelement mit Schneid-Klemm-Kontakten aus, die die Anschlussleitung kontaktieren, und das parallel zur Statorachse auf die Verschaltungsplatte derart aufsteckbar ist, dass die Schneid-Klemm-Kontakte die als Kontaktabschnitte ausgebildeten Endbereiche der Leiterbahnen kontaktieren.

Die Verwendung der Schneid-Klemm-Technik in Verbindung mit den als Kontaktabschnitten ausgebildeten Endbereichen der Leiterbahnen machen vorteilhafterweise aufwändigere Stecker-Buchse-Systeme als Verbindungselemente entbehrlich. Durch einfaches Aufstecken des erfindungsgemäßen, die Schneid-Klemm-Kontakte tragenden Steckerelements wird die elektrische Verbindung zu der Anschlussleitung hergestellt. Erfindungsgemäß sind die Kontaktabschnitte an den Enden der Leiterbahnen in Längsrichtung der Leiterbahn senkrecht aus der Leiterbahnebene herausgebogen. In diese Kontaktabschnitte greifen die Schneid-Klemm-Kontakte axial ein. Indem die Schneid-Klemm-Kontakte bei Aufstecken des Steckerelements unmittelbar die als Kontaktabschnitte an den Enden der Leiterbahnen kontaktieren, wird die elektrische Verbindung ohne zusätzliche Verbindungselemente bewirkt. Zweckmäßigerweise werden dabei die Leiterbahnen als einstückige Stanzbiegeteile mit Kontaktabschnitten und Anschlussfahnen oder Schutzleiteranschlussabschnitten ausgeführt, um den Teileumfang weiter zu reduzieren.

In einer vorteilhaften Ausgestaltung besteht das Steckerelement aus einer kreissegmentförmigen Deckfläche mit Umfangswandung, in das ein radial verlaufender Kanal mit einer axial-radial gerichteten Öffnung zum Durchführen einer Knickschutztülle eingelassen ist, durch die die Anschlussleitung verläuft. Dadurch kann vorteilhafterweise die externe Anschlussleitung vor Endmontage des Motors in das Steckerelement eingeführt werden. Durch die axial-radial gerichtete Öffnung in Verbindung mit der Knickschutztülle ist auch eine elektrisch und mechanisch sichere Zuführung der Anschlussleitung in ungünstigen Einbaupositionen möglich.

Von besonderem Vorteil ist, dass das Steckerelement Einstecköffnungen zur Aufnahme der Schneid-Klemm-Kontakte besitzt. Dadurch kann das vor der Endmontage in das Steckerelement eingeführte Anschlusskabel mittels der Schneid-Klemm-Kontakte zuverlässig verbunden werden. Das vorkonfektionierte Steckerelement kann nach dem Fertigungsprozess des Motors im Rahmen der Endmontage durch Aufstecken auf die Verschaltungsplatte mechanisch an den Motorflansch fixiert werden, wobei durch das Eingreifen der Schneid-Klemm-Kontakte in die Kontaktabschnitte an den Leiterbahnenden gleichzeitig die elektrische Verbindung mit den Kontaktabschnitten der Leiterbahnen hergestellt wird.

Weitere vorteilhafte Ausgestaltungsmerkmale der Erfindung werden an Hand eines bevorzugten, in den Zeichnungen veranschaulichten Ausführungsbeispiels erläutert. Dabei zeigen:
- Fig. 1: eine perspektivische Darstellung einer erfindungsgemäßen Anschlussvorrichtung in Einzelteilen ohne Steckerelement,
- Fig. 2a: eine Aufsicht der Verschaltungsplatte mit Leiterbahnen,
- Fig. 2b: einen Schnitt entlang der Schnittlinie A-A in Fig. 2a,
- Fig. 3: eine Aufsicht auf die mit einer Deckplatte versehene Verschaltungsplatte,
- Fig. 4: eine perspektivische Darstellung eines Steckerelements,
- Fig. 5: eine perspektivische Darstellung der an einem Motorflansch montierten Anschlussvorrichtung.

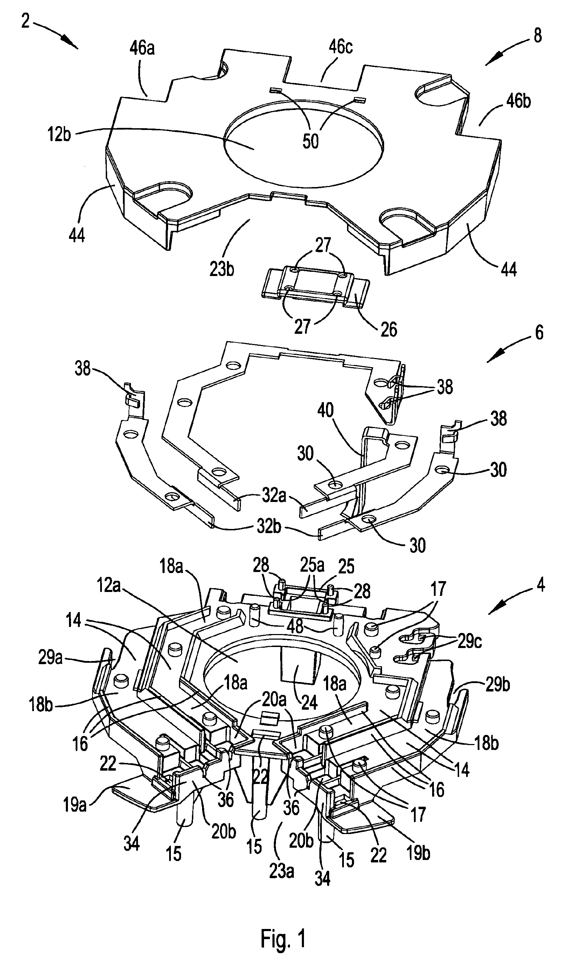

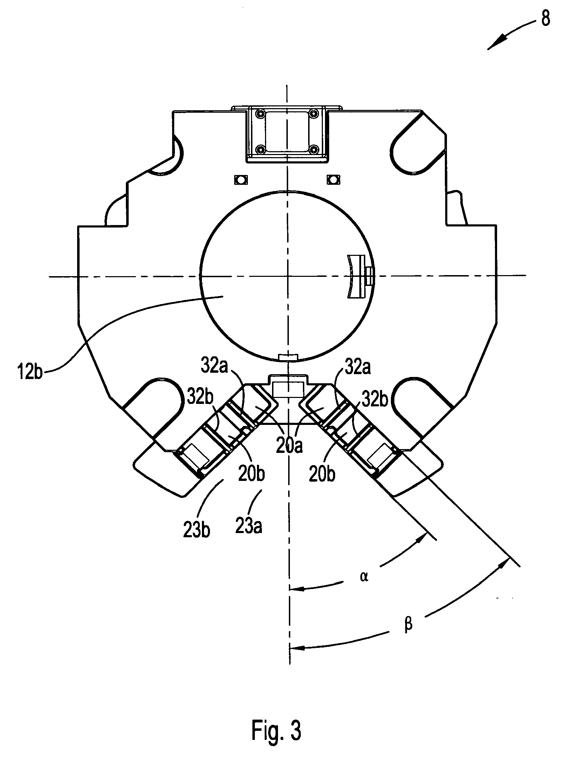

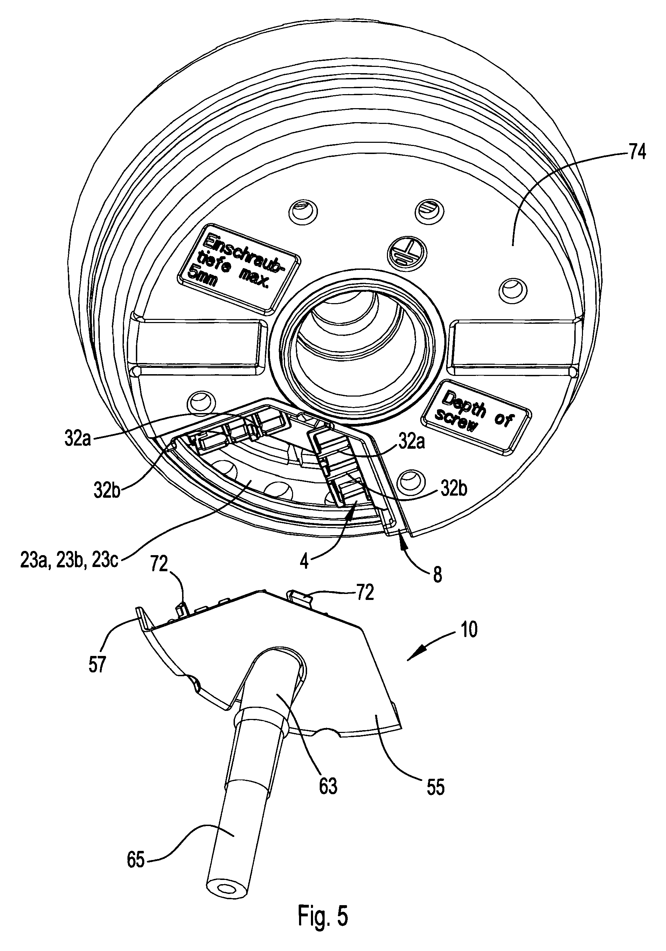

Fig. 1 zeigt eine perspektivische Darstellung der erfindungsgemäßen Anschlussvorrichtung 2 in Einzelteilen. Die Anschlussvorrichtung 2 besteht aus einer Verschaltungsplatte 4, in die Leiterbahnen 6 eingesetzt werden, und die mit einer Deckplatte 8 verschlossen wird. Ein zu der Anschlussvorrichtung 2 gehörendes Steckerelement 10 ist in Fig. 5 beschrieben. Die Verschaltungsplatte 4 besitzt eine kreisförmige Aufnahmeöffnung 12a für einen Stirnisolationsschaft eines Stators und dehnt sich demgemäß in einer radialen Ebene zu einer Statorachse aus. Zur Lagefixierung und zur Abstützung ist die Verschaltungsplatte 4 an ihrer dem Stator zugewandten Seite mit Distanzstiften 15 versehen. Auf der dem Stator abgewandten Seite sind durch Randstege 16 abgegrenzte Leiterbahnführungen 14 ausgebildet. Auf dem Grund der Leiterbahnführungen 14 sind axial abragend Positionszapfen 17 angeformt. Die Leiterbahnführungen 14 verlaufen im Wesentlichen umfänglich in einem innenliegenden höher gelegenen Polygonzug 18a und in einem außenliegenden tiefer gelegenen Polygonzug 18b und enden in vier entsprechend höhenversetzten Kontaktkammern 20a, 20b. Die vier Kontaktkammern 20a, 20b sind paarweise spiegelsymmetrisch zu einer durch den Mittelpunkt der Aufnahmeöffnung 12a verlaufenden Symmetrielinie mit einem, in Fig. 3 bezeichneten, Symmetriewinkel α von ca. 30 ° bis 60 ° angeordnet, wobei innerhalb des Öffnungswinkels 2 x α zwischen den Kontaktkammern 20a, 20b die Verschaltungsplatte 4 eine kreissegmentförmige Aussparung 23a besitzt. Die radial außenliegenden Kontaktkammern 20b besitzen Rastarmöffnungen 22 zur Verrastung des Steckerelements 10 und radial abweisend angeformte Auflageflächen 19a, 19b.

Parallel zur Statorachse ist an der Verschaltungsplatte 4 zum Stator gerichtet und der Aussparung 23a radial gegenüberliegend ein hohlzylindrischer Ansatz 24 mit Randkragen 25 angeformt, der zur Aufnahme eines Temperaturüberwachungselementes dient. Auf den hohlzylindrischen Ansatz 24 kann ein Deckelteil 26 aufgesteckt werden, in dessen Ecken vier Löcher 27 vorhanden sind, die von vier an der Verschaltungsplatte 4 axial abragenden, korrespondierenden Steckerzapfen 28 durchstoßen werden, um das Deckelteil 26 in seiner Position zu fixieren. Der Randkragen 25 weist an den zu dem Außenrand senkrechten Seiten Unterbrechungen 25a auf.

In ihrem äußeren Randbereich weist die Verschaltungsplatte 4 Zuführaussparungen 29a, 29b, 29c auf, durch die Wicklungsdrahtenden der Statorwicklung geführt werden können.

In die Leiterbahnführungen 14 werden die entsprechend dem Verlauf der Polygonzüge 18a, 18b gestanzten Leiterbahnen 6 flach aufliegend eingesetzt. In dem bevorzugten Ausführungsbeispiel sind vier Leiterbahnen 6 zur Verschaltung der Wicklungsdrahtenden mit der externen Anschlussleitung 65 vorgesehen. Zur Lagefixierung der Leiterbahnen 6 durchgreifen Positionierungszapfen 17 Positionierungsbohrungen 30 in den Leiterbahnen 6. Die in die vier Kontaktkammern 20a, 20b hineinragenden Endbereiche der Leiterbahnen 6 sind als Kontaktabschnitte 32 a, 32b senkrecht aus der Leiterbahnebene herausgebogen und stehen somit hochkant in den Kontaktkammern 20a, 20b. Dabei sind die Kontaktabschnitte 32a der innenliegenden Leiterbahnen 6 außen und die Kontaktabschnitte 32b der außenliegenden Leiterbahnen 6 innen angeformt. Die die kreissegmentförmige Aussparung 23a begrenzenden Stirnwandungen 34 sind mit axialen Einkerbungen 36 versehen, die die hochkant verlaufenden Kontaktabschnitte 32 an ihren Enden bei der Kontaktierung abstützen.

An den nicht als Kontaktabschnitte 32a, 32b ausgebildeten Enden der Leiterbahnen 6 sind Anschlussfahnen 38 zur Kontaktierung der Wicklungsdrahtenden oder ein in die Aufnahmeöffnung 12 hineinragender Schutzleiteranschlussabschnitt 40 angeformt.

Zweckmäßigerweise sind die Leiterbahnen 6 als einstückige Stanzbiegeteile mit Kontaktabschnitten 32a, 32b und Anschlussfahnen 38 bzw. einem Schutzleiteranschlussabschnitt 40 ausgebildet. Dabei sind, wie in den Figuren zu sehen, die Anschlussfahnen 38 zunächst senkrecht zur Leiterbahnebene, vom Stator abgewandt, abgewinkelt, um deren Verlötung oder Verschweißung mit den Wicklungsdrahtenden zu ermöglichen. Nach Verlötung oder Verschweißung werden die Anschlussfahnen 38 in Richtung der Zuführaussparungen 29a, 29b, 29c in die Ebene der Leiterbahnen 6 zurückgebogen.

Auf der dem Stator abgewandten Seite ist die Verschaltungsplatte 4 mit der Deckplatte 8 versehen, die eine Aufnahmeöffnung 12b und eine der kreissegmentförmigen Aussparung 23a der Verschaltungsplatte 4 entsprechende Aussparung 23b mit um die umfängliche Ausdehnung der Kontaktkammern 20a, 20b vergrößerten Öffnungswinkel 2 x β (Fig. 3) aufweist, so dass die Kontaktkammern 20a, 20b zur Aufnahme der Verbindungselemente axial zugänglich sind. Zur Ausrichtung der Deckplatte 8 sind zwei Ausrichtungszapfen 48 axial abragend an der Verschaltungsplatte 4 angeformt, die entsprechende Ausrichtungsbohrungen 50 in der Deckplatte 8 durchgreifen. Die Deckplatte 8 besitzt im Wesentlichen die Umfangskontur der Verschaltungsplatte 4, wobei eine Umfangswandung 44 die Verschaltungsplatte 4 übergreift. Die Umfangswandung 44 ist an zwei in der Deckplattenebene rechteckförmig verlaufenden Einschnitten 46a, 46b unterbrochen. Ein weiterer randoffener Einschnitt 46c in der Deckplatte 8 befindet sich bei aufgesetzter Deckplatte 8 über dem hohlzylindrischen Ansatz 24 und ermöglicht das Einpassen des Deckelteils 26 in der Deckplattenebene.

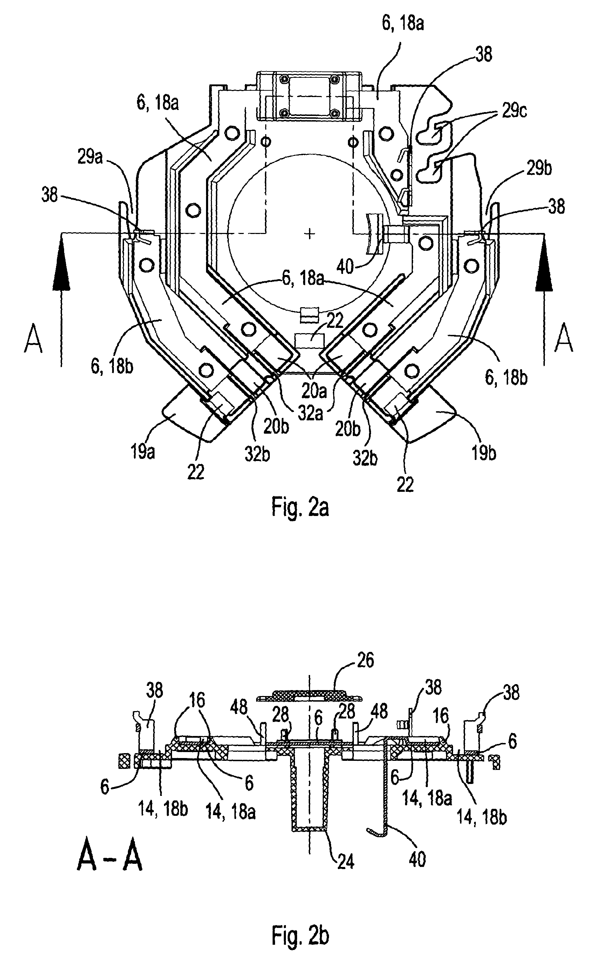

Fig. 2a zeigt eine Aufsicht auf die Verschaltungsplatte 4 mit den eingesetzten vier Leiterbahnen 6. Ein Endabschnitt der jeweiligen Leiterbahn 6 ist hochkant als Kontaktabschnitt 32a oder 32b ausgebildet in den jeweiligen Kontaktkammern 20a, 20b positioniert, wohingegen der andere Endabschnitt der jeweiligen Leiterbahn 6 senkrecht zur Leiterbahnebene stehend mit ein oder mehreren Anschlussfahnen 38 bzw. einem Schutzleiteranschlussabschnitt 40 ausgebildet ist. Die dem äußeren Polygonzug 18b folgenden Leiterbahnen 6 erstrecken sich in symmetrischer Ausgestaltung von den Kontaktkammern 20b bis zu der Schnittlinie A-A in Höhe der jeweiligen Zuführaussparungen 29a, 29b. Dem inneren Polygonzug 18a folgt eine Leiterbahn 6, die in der dargestellten Aufsicht im Uhrzeigersinn von der Kontaktkammer 20a über den hohlzylindrischen Ansatz 24 bis zu der Zuführaussparung 29c verläuft und dort zwei Anschlussfahnen 38 besitzt. Die vierte Leiterbahn 6 folgt ebenfalls dem Verlauf des inneren Polygonzugs 18a, sie beginnt mit dem Kontaktabschnitt 32a in der Kontaktkammer 20a und endet mit dem Schutzleiteranschlussabschnitt 40 an der Schnittlinie A-A.

Fig. 2b zeigt einen Schnitt entlang der Schnittlinie A-A in Fig. 2a. In dieser Darstellung des radialen Profils der Verschaltungsplatte 4 sind die höhenversetzten Leiterbahnführungen 14 mit ihren trennenden Randstegen 16 gut zu erkennen. In die Leiterbahnführungen 14 sind die Leiterbahnen 6 eingesetzt. Die Anschlussfahnen 38 der Leiterbahnen 6 ragen senkrecht, dem Stator abgewandt, der Schutzleiteranschlussabschnitt 40 und der hohlzylindrische Ansatz 24, dem Stator zugewandt, aus der Leiterbahnebene heraus. Der hohlzylindrische Ansatz 24 ist mit dem Deckelteil 26, fixiert durch die Steckerzapfen 28, abgedeckt.

Fig. 3 zeigt die mit der Deckplatte 8 versehene Verschaltungsplatte 4 in Aufsicht. In dieser Darstellung ist der um die umfängliche Ausdehnung der Kontaktkammern 20a, 20b vergrößerte Öffnungswinkel 2 x β der kreissegmentförmigen Aussparung 23b der Deckplatte 8 zu erkennen. Durch den größeren Öffnungswinkel bleiben die Kontaktkammern 20a, 20b axial zugänglich.

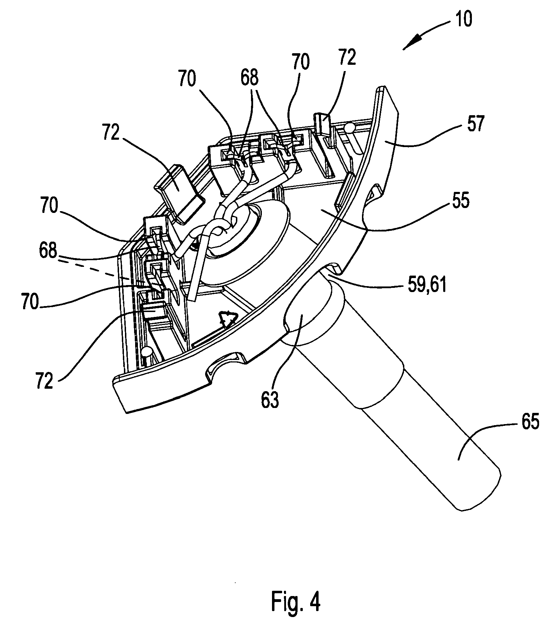

In Fig. 4 ist in perspektivischer Darstellung das Steckerelement 10 zu sehen. Das Steckerelement 10 besteht aus einer kreissegmentförmigen Deckfläche 55 mit einer Umfangswandung 57, in das ein radial verlaufender Kanal 59 mit einer axial-radial gerichteten Öffnung 61 zum Durchführen einer Knickschutztülle 63 eingelassen ist, durch die die Anschlussleitung 65 verläuft. Längs der radial verlaufenden Seiten des Steckerelements 10 sind vier Einsteckführungen 70 geformt, in die die Schneid-Klemm-Kontakte 68 senkrecht zur Deckfläche 55 vollständig eingeschoben werden können und auf dem Grund der Einsteckführungen 70 die einzelnen Adern der Anschlussleitung 65 kontaktieren. Die Einsteckführungen 70 sind an die unterschiedlichen Höhen der Kontaktkammern 20a, 20b angepasst. Dadurch ist sichergestellt, dass die in den Einsteckführungen 70 befindlichen Schneid-Klemm-Kontakte 68 mit ihren der Deckfläche 55 abgewandten Schneiden beim Aufstecken des Steckerteils 10 die hochkant ausgerichteten Kontaktabschnitte 32a, 32b der Leiterbahnen 6 sicher kontaktieren.

Axial nach innen ragend sind drei Rastarme 72 vorgesehen, deren Position mit den drei Rastarmöffnungen 22 in der Verschaltungsplatte 4 korrespondiert.

Fig. 5 zeigt die an einen Motorflansch 74 montierte Verschaltungsplatte 4. Der Motorflansch 74 weist eine kreissegmentförmige Aussparung 23c auf, deren Öffnungswinkel geringfügig über den der Aussparung 23b der Deckplatte 8 hinausgeht. In die Aussparung 23c kann das vormontierte Steckerelement 10 eingesetzt werden. Dabei wird das Steckerelement 10 durch die drei Rastarme 72 an der unter dem Motorflansch 74 montierten Verschaltungsplatte 4 verrastet, wobei die Schneid-Klemm-Kontakte 68 des Steckerelements 10 über die Kontaktabschnitte 32a, 32b der Leiterbahnen 6 und die Anschlussfahnen 38 die Statorwicklung kontaktieren.

Die Erfindung ist nicht auf die dargestellten und beschriebenen Ausführungsbeispiele beschränkt, sondern umfaßt auch alle durch die Ansprüche definierten gleichwirkenden Ausführungen.

## Patentansprüche

1. Anschlussvorrichtung (2) für einen Elektromotor, insbesondere einen Außenläufermotor, zum Verbinden von Wicklungsenden eines Stators mit einer Anschlussleitung (65), bestehend aus einer in einer radial zur Statorachse ausgerichteten Ebene und innerhalb eines durch einen Statordurchmesser definierten Umfangskreises angeordneten Verschaltungsplatte (4), die ausgeformte Leiterbahnführungen (14) und Leiterbahnen (6) mit Anschlussfahnen (38) zur Kontaktierung der Statorwicklung und mit Anschlussbereichen zur Kontaktierung der Anschlussleitung (65) aufweist,
**gekenntzeichnet durch** ein an der Anschlussleitung (65) vormontierbares Steckerelement (10) mit Schneid-Klemm-Kontakten (68), die die Anschlussleitung (65) kontaktieren, und das parallel zur Statorachse auf die Verschaltungsplatte (4) derart aufsteckbar ist, dass die Schneid-Klemm-Kontakte (68) die als Kontaktabschnitte (32a, 32b) ausgebildeten Endbereiche der Leiterbahnen (6) kontaktieren, wobei die Kontaktabschnitte (32a, 32b) an den Enden der Leiterbahnen (6) in Längsrichtung der Leiterbahn senkrecht aus der Leiterbahnebene herausgebogen sind und die Schneid-Klemm-Kontakte (68) axial in diese Kontaktabschnitte (32a, 32b) eingreifen.

2. Anschlussvorrichtung (2) nach Anspruch 1,
**dadurch gekennzeichnet, dass** die Leiterbahnen (6) als einstückige Stanzbiegeteile mit den Kontaktabschnitten (32a, 32b) und mit Anschlussfahnen (38) bzw. einem Schutzleiteranschlussabschnitt (40) ausgebildet sind.

3. Anschlussvorrichtung (2) nach Anspruch 1 order 2,
**dadurch gekennzeichnet, dass** das Steckerelement (10) aus einer kreissegmentförmigen Deckfläche (55) mit einer Umfangswandung (57) besteht, in das ein radial verlaufender Kanal (59) mit einer axial-radial gerichteten Öffnung (61) zum Durchführen einer Knickschutztülle (63) eingelassen ist, durch die die Anschlussleitung (65) verläuft.

4. Anschlussvorrichtung (2) nach einem der Ansprüche 1 bis 3,
**dadurch gekennzeichnet, dass** dasSteckerelement(10) Einsteckführungen (70) zur Aufnahme der Schneid-Klemm-Kontakte (68) besitzt.

5. Anschlussvorrichtung (2) nach einem der Ansprüche 1 bis 4,
**dadurch gekennzeichnet, dass** Kontaktkammern (20a,20b) zur Aufnahme der Schneid-Klemm-Kontakte (68) paarweise spiegelsymmetrisch zu einer durch den Mittelpunkt einer Aufnahmeöffnung (12a) verlaufenden Symmetrielinie mit einem Symmetriewinkel (α) von 30° bis 60° ausgebildet sind, und dass die Verschaltungsplatte (4) innerhalb eines Öffnungswinkels (2-α) zwischen den Kontaktkammern (20a, 20b) eine kreissegmentförmige Aussparung (23a) besitzt.

6. Anschlussvorrichtung (2) nach einem der Ansprüche 1 bis 5,
**dadurch gekennzeichnet, dass** inderVerschaltungsplatte(4) durch Randstege (16) abgegrenzte Leiterbahnführungen (14) ausgebildet sind, die umfänglich in einem innenliegenden höhergelegenen Polygonzug (18a) und einem außenliegenden tiefergelegenen Polygonzug (18b) verlaufen, und die in den entsprechend höhenversetzten Kontaktkammern (20a, 20b) enden.

7. Anschlussvorrichtung (2) nach einem der Ansprüche 1 bis 6,
**dadurch gekennzeichnet, dass** die Leiterbahnen (6) Positionierungssbohrungen (30) aufweisen, in die auf der Verschaltungsplatte (4) angeformte Positionierungsszapfen (17) eingreifen.

8. Anschlussvorrichtung (2) nach einem der Ansprüche 1 bis 7,
**dadurch gekennzeichnet, dass** die Verschaltungsplatte (4) in den außenliegenden Kontaktkammern (20b) jeweils eine Rastarmöffnung (22) und zwischen den innenliegenden Kontaktkammern (20a) eine weitere Rastarmöffnung (22) zur Verrastung des Steckerelements (10) besitzt.

9. Anschlussvorrichtung (2) nach einem der Ansprüche 1 bis 8,
**dadurch gekennzeichnet, dass** die Verschaltungsplatte (4) in ihrem äußeren Randbereich Zuführ-Aussparungen (29a, 29b, 29c) zum Durchführen der Wicklungsdrahtenden aufweist.

10. Anschlussvorrichtung (2) nach einem der Ansprüche 1 bis 9,
**dadurch gekennzeichnet, dass** die Verschaltungsplatte (4) eine Aufnahmeöffnung (12a) für einen Stirnisolationsschaft des Stators aufweist.

11. Anschlussvorrichtung (2) nach einem der Ansprüche 1 bis 10,
**dadurch gekennzeichnet, dass** die Verschaltungsplatte (4) auf der dem Stator abgewandten Seite mit einer Deckplatte (8) versehen ist, die eine Aufnahmeöffnung (12b) und eine der kreissegmentförmigen Aussparung (23a) der Verschaltungsplatte (4) entsprechende Aussparung (23b) mit um die umfängliche Ausdehnung der Kontaktkammern (20a, 20b) vergrößertem Öffnungswinkel (2 β) aufweist, so dass die Kontaktkammern (20a, 20b) zur Aufnahme der Verbindungselemente axial zugänglich sind.

12. Anschlussvorrichtung (2) nach einem der Ansprüche 1 bis 11,
**dadurch gekennzeichnet, dass** an der Verschaltungsplatte (4), parallel zur Statorachse, zum Stator gerichtet und der Aussparung (23a) radial gegenüberliegend, ein hohlzylindrischer Ansatz (24) mit Randkragen (25) angeformt ist, der zur Aufnahme eines Temperaturüberwachungselements dient

13. Anschlussvorrichtung (2) nach Anspruch 11 oder 12,
**dadurch gekennzeichnet, dass** das im Bereich der kreissegmentförmigen Aussparung (23b) der Deckplatte (8) ein Motorflansch (74) eine kreissegmentförmige Aussparung (23c) aufweist, in die das Steckerelement (10) axial eingesetzt ist und axial mit drei Rastarmen (72) in den Rastarmöffnungen (22) der Verschaltungsplatte (4) verrastbar ist.

## Claims

1. Connecting device (2) for an electric motor, in particular an external-rotor motor, for connecting winding ends of a stator to a connecting lead (65), composed of an interconnection plate (4) which is arranged in a plane oriented radially with respect to the stator axis and within a circumferential circle defined by a stator diameter, and which has shaped conducting-track guides (14) and conducting tracks (6) with terminal lugs (38) for contacting the stator winding and with connecting regions for contacting the connecting lead (65),
**characterised by** a plug element (10) which can be pre-assembled on the connecting lead (65) and has insulation displacement contacts (68) contacting the connecting lead (65), and which can be plugged onto the interconnection plate (4) parallel to the stator axis in such a manner that the insulation displacement contacts (68) contact the end regions of the conducting tracks (6) formed as contact sections (32a, 32b), the contact sections (32a, 32b) at the ends of the conducting tracks (6) being bent perpendicularly out of the plane of the conducting tracks and the insulation displacement contacts (68) engaging axially in these contact sections (32a, 32b).

2. Connecting device (2) according to Claim 1,
**characterised in that** the conducting tracks (6) are formed as one-piece stamped and bent parts with the contact sections (32a, 32b) and with terminal lugs (38) and an earth conductor terminal section (40), respectively.

3. Connecting device (2) according to Claim 1 or 2,
**characterised in that** the plug element (10) is composed of a circular-segment-shaped covering surface (55) with a circumferential wall (57), into which is let a radially running channel (59) with an axially and radially directed opening (61) for leading through an anti-kink sleeve (63), through which the connecting lead (65) runs.

4. Connecting device (2) according to one of Claims 1 to 3,
**characterised in that** the plug element (10) has plug-in guides (70) for receiving the insulation displacement contacts (68).

5. Connecting device (2) according to one of Claims 1 to 4,
**characterised in that** contact chambers (20a, 20b) for receiving the insulation displacement contacts (68) are formed in pairs mirror-symmetrically with respect to a line of symmetry running through the central point of a receiving opening (12a), with an angle of symmetry (α) of 30° to 60°, and **in that** the interconnection plate (4) has a circular-segment-shaped recess (23a) within an opening angle (2·α) between the contact chambers (20a, 20b).

6. Connecting device (2) according to one of Claims 2 to 5,
**characterised in that** conducting-track guides (14) delimited by edge webs (16) are formed in the interconnection plate (4), which guides run circumferentially in an inner higher-situated polygon (18a) and an outer lower-situated polygon (18b) and end in the contact chambers (20a, 20b) of correspondingly offset height.

7. Connecting device (2) according to one of Claims 1 to 6,
**characterised in that** the conducting tracks (6) have positioning bores (30), in which positioning pins (17) formed on the interconnection plate (4) engage.

8. Connecting device (2) according to one of Claims 1 to 7,
**characterised in that** the interconnection plate (4) has in the outer contact chambers (20b) in each case a latching arm opening (22) and between the inner contact chambers (20a) a further latching arm opening (22) for the latching of the plug element (10).

9. Connecting device (2) according to one of Claims 1 to 8,
**characterised in that** the interconnection plate (4) has in its outer edge region feeding recesses (29a, 29b, 29c) for leading through the winding wire ends.

10. Connecting device (2) according to one of Claims 1 to 9,
**characterised in that** the interconnection plate (4) has a receiving opening (12a) for a front insulation shaft of the stator.

11. Connecting device (2) according to one of Claims 1 to 10,
**characterised in that** the interconnection plate (4) is provided, on the side facing away from the stator, with a cover plate (8) which has a receiving opening (12b) and a recess (23b) corresponding to the circular-segment-shaped recess (23a) of the interconnection plate (4) and having an opening angle (2 β) enlarged by the circumferential extent of the contact chambers (20a, 20b), so that the contact chambers (20a, 20b) are axially accessible for receiving the connecting elements.

12. Connecting device (2) according to one of Claims 1 to 11,
**characterised in that** a hollow-cylindrical projection (24) with edge collar (25), which serves for receiving a temperature monitoring element, is formed on the interconnection plate (4) in a manner parallel to the stator axis, directed towards the stator and lying radially opposite the recess (23a).

13. Connecting device (2) according to Claim 11 or 12,
**characterised in that** the [sic] in the region of the circular-segment-shaped recess (23b) of the cover plate (8) a motor flange (74) has a circular-segment-shaped recess (23c), into which the plug element (10) is axially inserted and can be axially latched by three latching arms (72) in the latching arm openings (22) of the interconnection plate (4).

## Revendications

1. Dispositif de connexion (2) pour moteur électrique, en particulier un moteur à rotor externe, pour connecter les extrémités d'enroulement d'un stator à une ligne de connexion (65), composé d'une plaque de câblage (4) disposée dans un plan aligné radialement par rapport à l'axe de stator et à l'intérieur d'un périmètre défini par un diamètre de stator, ladite plaque présentant des dispositifs de guidage pour piste conductive (14) et des pistes conductives (6) avec des barrettes de connexion (38) pour établir le contact avec l'enroulement de stator et avec des plages de connexion pour établir le contact avec la ligne de connexion (65),
**caractérisé par** un élément enfichable (10) à prémonter sur la ligne de connexion (65), avec des contacts à borne guillotine (68) établissant le contact avec la ligne de connexion (65), et qui peut s'enficher en parallèle à l'axe de stator sur la plaque de câblage (4) de telle sorte que les contacts à borne guillotine (68) établissent le contact avec les zones d'extrémité des pistes conductives (6), réalisées sous forme de segments de contact (32a, 32b), dans lequel les segments de contact (32a, 32b) aux extrémités des pistes conductives (6) sont pliés dans la direction longitudinale de la piste conductive verticalement hors du plan de piste conductive, et les contacts à borne guillotine (68) viennent axialement en prise avec ces segments de contact (32a, 32b).

2. Dispositif de connexion (2) selon la revendication 1,
**caractérisé en ce que** les pistes conductives (6) sont réalisées sous forme de pièces estampées pliées intégrales avec les segments de contact (32a, 32b) et avec des barrettes de connexion (38) ou un segment de connexion de terre (40).

3. Dispositif de connexion (2) selon la revendication 1 ou 2,
**caractérisé en ce que** l'élément enfichable (10) se compose d'une surface de recouvrement (55) en forme de segment de cercle avec une paroi circonférentielle (57), dans lequel est pratiqué un canal (59) s'étendant radialement avec une ouverture (61) orientée de façon axiale et radiale pour le passage d'une gaine de protection anticoque (63) par laquelle s'étend la ligne de connexion (65).

4. Dispositif de connexion (2) selon l'une quelconque des revendications 1 à 3,
**caractérisé en ce que** l'élément enfichable (10) possède des dispositifs de guidage d'insertion (70) pour recevoir les contacts à borne guillotine (68).

5. Dispositif de connexion (2) selon l'une quelconque des revendications 1 à 4,
**caractérisé en ce que** des chambres de contact (20a, 20b) pour recevoir les contacts à borne guillotine (68) sont réalisées par paires en symétrie spéculaire par rapport à une bissectrice s'étendant à travers le centre d'une ouverture de réception (12a), sous un angle de symétrie (α) de 30° à 60°, et **en ce que** la plaque de câblage (4) possède à l'intérieur d'un angle d'ouverture (2-α) entre les chambres de contact (20a, 20b) un évidement en forme de segment de cercle (23a).

6. Dispositif de connexion (2) selon l'une quelconque des revendications 1 à 5,
**caractérisé en ce que** dans la plaque de câblage (4) sont réalisés des dispositifs de guidage de piste conductive (14) délimités par des entretoises de bord (16), qui s'étendent en circonférence selon un tracé polygonal (18a) situé à l'intérieur et plus haut, et un tracé polygonal (18b) situé à l'extérieur et plus bas, et qui se terminent par les chambres de contact (20a, 20b) décalées en hauteur de façon adéquate.

7. Dispositif de connexion (2) selon l'une quelconque des revendications 1 à 6,
**caractérisé en ce que** les pistes conductives (6) présentent des perçages de positionnement (30) dans lesquels s'engagent des chevilles de positionnement (17) rapportées à la plaque de câblage (4).

8. Dispositif de connexion (2) selon l'une quelconque des revendications 1 à 7,
**caractérisé en ce que** la plaque de câblage (4) possède dans les chambres de contact (20b) situées à l'extérieur respectivement une ouverture pour bras d'enclenchement (22) et entre les chambres de contact (20a) situées à l'intérieur une autre ouverture pour bras d'enclenchement (22) pour enclencher l'élément enfichable (10).

9. Dispositif de connexion (2) selon l'une quelconque des revendications 1 à 8,
**caractérisé en ce que** la plaque de câblage (4) présente dans sa zone périphérique extérieure des évidements d'amenée (29a, 29b, 29c) pour le passage des extrémités de fil d'enroulement.

10. Dispositif de connexion (2) selon l'une quelconque des revendications 1 à 9,
**caractérisé en ce que** la plaque de câblage (4) présente une ouverture de réception (12a) pour une tige d'isolation frontale du stator.

11. Dispositif de connexion (2) selon l'une quelconque des revendications 1 à 10,
**caractérisé en ce que** la plaque de câblage (4) est munie du côté détourné du stator d'une plaque de recouvrement (8) qui présente une ouverture de réception (12b) et un évidement (23b) correspondant à l'évidement (23a) en forme de segment de cercle de la plaque de câblage (4), avec un angle d'ouverture (2 β) agrandi de l'étendue circonférentielle des chambres de contact (20a, 20b), de sorte que les chambres de contact (20a, 20b) sont accessibles axialement pour recevoir les éléments de connexion.

12. Dispositif de connexion (2) selon l'une quelconque des revendications 1 à 11,
**caractérisé en ce que** sur la plaque de câblage (4), en parallèle à l'axe de stator, en étant tourné vers le stator et radialement à l'opposé de l'évidement (23a), est rapporté un embout (24) cylindrique creux avec un rebord (25) qui sert à recevoir un élément de contrôle de température.

13. Dispositif de connexion (2) selon la revendication 11 ou 12,
**caractérisé en ce que** dans la zone de l'évidement (23b) en forme de segment de cercle de la plaque de recouvrement (8), une bride de moteur (74) présente un évidement (23c) en forme de segment de cercle dans lequel l'élément enfichable (10) est placé axialement et peut s'enclencher axialement avec trois bras d'enclenchement (72) dans les ouvertures pour bras d'enclenchement (22) de la plaque de câblage (4).
